# EUROPÄISCHE PATENTANMELDUNG

(11) **EP 4 245 727 A1**
(43) Veröffentlichungstag der Anmeldung: **20.09.2023**
(21) Anmeldenummer: 22162471.1
(22) Anmeldetag: 16.03.2022
(51) Int. Cl.: C02F 1/00, C02F 3/04, C02F 103/20, C02F 103/26, C02F 3/10, C02F 3/30

(54) **VORRICHTUNG ZUM REINIGEN EINER WABENKERAMIK FÜR DIE AUFBEREITUNG VON FLÜSSIGEN WIRTSCHAFTSDÜNGERN UND ENTSPRECHENDES VERFAHREN**

(71) Anmelder: WK Filtertechnik UG & Co. KG, 27619 Schiffdorf (DE)
(72) Erfinder: KRUG, Steven, 27619 Schiffdorf (DE)
(74) Vertreter: Erbacher, Martin

(57) **Zusammenfassung**

Die Erfindung betrifft eine Vorrichtung zum Reinigen einer Wabenkeramik für die Aufbereitung von flüssigen Wirtschaftsdüngern;
Mit einer Wabenkeramik zum Filtern von belastetem Wasser, wie bspw. Gärreste, wobei die Wabenkeramik eine Einlassseite zum Einleiten des belasteten Wassers und eine Auslassseite zum Ausleiten des in der Wabenkeramik gefilterten Wassers und der aus dem belasteten Wasser abgeschiedenen Stoffe aufweist, wobei in der Wabenkeramik Mikroorganismen für die Spaltung des belasteten Wassers vorgesehen sind, und wobei die Wabenkeramik eine Mehrzahl zwischen der Einlassseite und der Auslassseite verlaufende Kanäle aufweist;
Und mit einer an der Einlass- oder der Auslassseite der Wabenkeramik angeordneten Reinigungsvorrichtung, welche zum Reinigen der Mehrzahl Kanäle der Wabenkeramik eingerichtet ist. Die Erfindung betrifft ferner ein Verfahren zum Reinigen einer Wabenkeramik zur Aufbereitung von flüssigen Wirtschaftsdüngern aus der Landwirtschaft.

## Beschreibung

Die Erfindung betrifft eine Vorrichtung zum Reinigen einer Wabenkeramik für die Aufbereitung von flüssigen Wirtschaftsdüngern.

Aus dem Stand der Technik ist bekannt, für die Filtration von flüssigen Wirtschaftsdüngern durch Erhitzung von Gärresten das darin enthaltene Wasser zu verdampfen, was jedoch durch die benötigte hohe Prozesswärme zu erheblichen Energiekosten führt und letztendlich nicht wirtschaftlich betrieben werden kann.

Ferner ist bekannt, mit dem Einsatz von Filtern bzw. Membranen zu versuchen, das Wasser von den Feststoffen zu separieren. Letztlich muss das Wasser dabei durch immer kleinere Poren hindurchgeleitet werden, damit die sich im Wasser befindlichen Nährstoffe im Filter darin zurückbleiben. Bei dieser Methode entstehen allerdings hohe Kosten für die Mechanik, die Säuberung und Energie. Dies Verfahren ist auch bekannt unter dem Namen Umkehrosmose.

Eine konventionelle Methode besteht ferner in der Verbringung von Gärresten auf fremde Felder mit LKWs, zum Teil auch über weite Strecken und in andere Bundesländer. Hierbei sind hohe Kosten von über 20 Euro je Kubikmeter, in Abhängigkeit vom Zielort, verbunden. Diese Entsorgung ist nur als allerletzte Alternative für den Landwirt anzusehen, wenn er keine anderweitige Chance hat, die Gärreste auf umliegenden Feldern entsorgen zu können. Die vorgenannten Methoden für die Filtration oder Entsorgung von Gärresten sind preislich nicht konkurrenzfähig und liegen bei mindestens 15 Euro je Kubikmeter, die bei der Entsorgung anfallen.

Ferner sind sogenannte Zentralanlagen bekannt, welche auf einem mechanisch, biologisch, thermisch und chemischen Prozessablauf zur Wiederaufbereitung des Wirtschaftsdüngers beruhen. Aber auch bei diesen muss die Gülle weiterhin zu der zentralen Sammelstelle gebracht werden. Ferner benötigen derartige Anlagen einen Personalaufwand von zumindest 7 Mitarbeitern, was erhebliche permanente Betriebskosten verursacht.

Zusammengefasst weisen die oben erörterten Verfahren somit folgende Nachteile auf: Die Methode der Trocknung bzw. des Vakuumverdampfers ist sehr energieintensiv. Die Filtration über eine Membran per Umkehrosmose ist sehr reparaturanfällig bzw. wartungsintensiv. Die Verbringung von Gärresten auf fremde Felder mit LKW ist extrem teuer pro Transport. Die Nutzung einer Zentralanlage bringt hohe Personal- und Betriebskosten mit sich.

Es besteht ein Bedarf für Betreiber von Biogasanlagen sowie Betriebe mit größeren Tierbeständen nach einer Lösung für den effizienten und nachhaltigen Umgang mit Wirtschafts dünger.

Es ist daher die Aufgabe der Erfindung, eine Vorrichtung für die Filtration von flüssigen Wirtschaftsdüngern derart zu verbessern, dass diese günstig, energieeffizient und wartungsarm betrieben werden kann.

Die Aufgabe wird gelöst mit den Merkmalen der unabhängigen Ansprüche.

Demgemäß ist vorgesehen, dass die Vorrichtung eine Wabenkeramik zum Filtern von belastetem Wasser, wie bspw. Gärreste, aufweist, wobei die Wabenkeramik eine Einlassseite zum Einleiten des belasteten Wassers und eine Auslassseite zum Ausleiten des in der Wabenkeramik gefilterten Wassers und der aus dem belasteten Wasser abgeschiedenen Stoffe aufweist, wobei in der Wabenkeramik Mikroorganismen für die Spaltung des belasteten Wassers vorgesehen sind, und wobei die Wabenkeramik eine Mehrzahl zwischen der Einlassseite und der Auslassseite verlaufende Kanäle aufweist. Ferner weist die Vorrichtung eine an der Einlass- oder der Auslassseite der Wabenkeramik angeordnete Reinigungsvorrichtung auf, welche zum Reinigen der Mehrzahl Kanäle der Wabenkeramik eingerichtet ist.

Durch die mikrobakterielle Aufbereitung weist die erfindungsgemäße Vorrichtung den Vorteil auf, gegenüber den bekannten Verfahren mit mechanischer, thermischer oder chemischer Klärung eine deutlich effizientere Methode zu verwirklichen. Dadurch wird ein wirtschaftliches Betreiben von Biogasanlagen ermöglicht und gleichzeitig eine wirksame Methode für den Erhalt von sauberem Grundwasser bereitgestellt. Durch den geringeren Energieverbrauch werden weniger CO₂Emissionen erzeugt. Ferner ermöglicht die Vorrichtung eine Verringerung des Verkehrsaufkommens, durch die dann nicht mehr notwendigen Transporte der Gärreste per LKW. Außerdem ermöglicht die Vorrichtung ein permanentes Betreiben und trägt daher einen Teil zum unverzichtbaren Erhalt der Energiegrundlastabsicherung bei. Es kann vorgesehen sein, dass in einer aeroben Nitrifikationsstufe eine erste Sorte Mikroorganismen zum Umwandeln von Ammonium und Nitrit in Nitrat eingerichtet ist. Ferner kann eine zweite Sorte Mikroorganismen vorgesehen sein, welche in einer anaeroben Denitrifikationsstufe zu reduzieren des Nitratgehalt eingerichtet ist.

In der Anlage kommt keine Chemie zum Einsatz, sondern Mikroorganismen. Diese Mikroorganismen sind speziell für die Spaltung der Abwässer konfiguriert. Das Habitat der Mikroorganismen stellen die Keramikblöcke bzw. die Wabenkeramik dar, ein Naturmaterial, welches neben exzellenten Bedingungen eine sehr große Ansiedlungsfläche für die Mikroorganismen bietet. Bei einer vorgesehenen Größe der Vorrichtung passt diese in zwei 40-Fuß-Container und bietet den Mikroorganismen eine Ansiedlungsfläche von ca.136 ha.

Es kann vorgesehen sein, dass die Vorrichtung in einem geschlossenen Kreislauf eingesetzt wird. Beispielsweise kann die Vorrichtung in einem Behälter aufgenommen sein. Dabei kann auf der einen Seite des Behälters belastetes Wasser bzw. Gärreste (Amonium, Nitrat, Nitrit und Phosphor) eingeleitet werden. Nach dem Durchströmen der Wabenkeramik können auf der anderen Seite zu ca. 90% einleitfähiges Wasser sowie Feststoffe mit Dünger (Stickstoff und Phosphor) herauskommen. Die Wabenkeramik kann als im Wesentlichen kubischer Keramikblock ausgebildet sein, wobei in der Wabenkeramik die Mikroorganismen beheimatet sein können. Damit eignet sich die Wabenkeramik ideal, um auf geringsten Raum eine maximale Filterung und Zersetzung der Nährstoffe zu erreichen.

Die Reinigungsvorrichtung dazu eingerichtet, dass die Anlage ohne Unterbrechung betrieben werden kann. Dazu kann vorgesehen sein, dass die Reinigungsvorrichtung jeweils nur einen Teil der Wabenkeramik bedeckt und im Betrieb über die Oberfläche, d. h. die Einlass- oder Auslassseite der Wabenkeramik hin und her bewegt wird, sodass das zu reinigende Wasser jeweils noch durch die nicht bedeckten Kanäle der Wabenkeramik strömen kann. Es kann vorgesehen sein, dass die Reinigungsvorrichtung zum Gegenspülen und/oder Reinigen des Ansiedlungsmediums eingerichtet ist. Dazu kann vorgesehen sein, dass die Reinigungsvorrichtung die Kanäle der Wabenkeramik mit einem hohen Wasserdruck durchgespült bzw. durchspritzt.

Dadurch ist es möglich, dass die Anlage weitestgehend temperaturunabhängig und autark bei einer Prozesswärme von ca. 35 Grad und das 24 Stunden am Tag und 365 Tage im Jahr arbeiten kann. Gegen Unterbrechungen sind die Mikroorganismen weitestgehend resistent. Denn selbst wenn diese durch Abstellen der Zufuhr der "Nahrung" (Gärreste) verhungern, so kann vorgesehen sein, dass genug von ihnen überleben, um bei einer Verdopplungsrate innerhalb von 24 Stunden in kürzester Zeit wieder zu alter Abbaustärke zurückzufinden. Die vorgesehene Verdopplungsrate der Mikroorganismen kann daher 24 Stunden betragen. Auch kann eine Anlage durch die Hinzugabe neuer Mikroorganismen jederzeit wieder neu gestartet werden, beispielsweise, wenn diese in einer Mikroorganismen-Bank laufend vorgehalten werden. Um den Übertritt aus der Anlage in das geklärte Wasser zu verhindern, kann vorgesehen sein, dass die nach dem Passieren der Wabenkeramik verbliebenen Mikroben in der letzten Stufe mit UV-Lampen unschädlich gemacht werden.

Es kann vorgesehen sein, dass die zwischen der Einlassseite und der Auslassseite verlaufenden Kanäle einen Durchmesser von jeweils mindestens 2 mm, bevorzugt mindestens 3 mm aufweisen. Durch Auswahl dieses bevorzugten Bereichs kann einerseits eine große Oberfläche für die Ansiedlung von Mikroorganismen bereitgestellt werden, andererseits wird eine gute Reinigung der Kanäle durch die Reinigungsvorrichtung ermöglicht. Dieser bevorzugte Bereich stellt einen optimalen Kompromiss zwischen beiden Eigenschaften dar.

Ferner kann die Reinigungsvorrichtung zumindest eine in Richtung der Wabenkeramik gerichtete Düse zum Ausbringen einer Reinigungsflüssigkeit aufweisen, mittels welcher die Mehrzahl Kanäle durchgespült werden können. Die Düse weist die Funktion auf, die in den Keramikblöcken angesammelten Schmutzpartikel auszublasen. Diese können sich insbesondere an den Innenwänden der Kanäle ansammeln und diese nach und nach verstopfen.

Wobei die Düse Abdichtungsmittel zum seitlichen Abdichten der Düse aufweist, wobei die Abdichtungsmittel an der Einlass- oder der Auslassseite der Wabenkeramik anliegen. Die Düse kann dabei so angeordnet sein, dass sie mit den Abdichtungsmitteln direkt auf der Wabenkeramik verfahrbar ist. Die Abdichtungsmittel können als Silikondichtungen ausgeführt sein. Durch vorsehen der Abdichtungsmittel kann der Wasserstrahl bzw. der Reinigungsmittelstrahl gezielt in die Kanäle geleitet werden, ohne dass das Reinigungsmittel orthogonal zu den Kanälen entweichen kann.

Außerdem kann vorgesehen sein, dass die Düse zum gleichzeitigen Reinigen von zumindest zwei der Mehrzahl Kanäle eingerichtet ist. Die zwei oder mehr der Mehrzahl gleichzeitig gereinigter Kanäle können dabei nebeneinander angeordnet sein.

Ferner kann vorgesehen sein, dass die Reinigungsvorrichtung einen Antrieb aufweist, mittels welcher die Düse entlang der Einlass- oder der Auslassseite der Wabenkeramik verfahrbar ist. Insbesondere kann vorgesehen sein, dass die Reinigungsvorrichtung linear verfahren werden kann. Dazu kann die Reinigungsvorrichtung einen Antrieb aufweisen, der zum linearen Verfahren der Reinigungsvorrichtung eingerichtet. An der der Wabenkeramik abgewandten Seite kann Reinigungsvorrichtung einen oder mehrere Einlässe zum Versorgen der Düse mit Reinigungsmittel und Luftdruck aufweisen. An den Einlässen können entsprechende Versorgungsleitungen, insbesondere eine Wasserleitung und eine Luftdruckleitung angeschlossen sein.

Außerdem kann vorgesehen sein, dass die Düse in zumindest einer Schiene seitlich fixiert und entlang dieser verfahrbar ist. Alternativ kann die Reinigungsvorrichtung ein Gestell oder einen Rahmen aufweisen, in welchen die Düse gehalten ist, wobei die Reinigungsvorrichtung über den Rahmen oder das Gestell in der Schiene läuft. Insbesondere kann die Reinigungsvorrichtung oder die Düse an gegenüberliegenden Seiten, insbesondere orthogonal zur Bewegungsachse, zwei Schienen aufweisen. Ferner kann die Reinigungsvorrichtung oder die Düse Mittel zum Verfahren der Reinigungsvorrichtung oder der Düse in den Schienen, insbesondere Rollen aufweisen. Alternativ kann vorgesehen sein, dass zumindest eine der Schienen als Gewindespindel ausgebildet ist und die Düse ein entsprechendes Gewinde aufweist, sodass die Düse mittels der Gewindespindel antreibbar ist.

Ferner kann vorgesehen sein, dass die Wabenkeramik sich in einer Längs- und in einer Querrichtung erstreckt, entlang welcher die Mehrzahl Kanäle in Längs- und Querreihen rasterförmig angeordnet sind, wobei sich die Düse entlang zumindest einer Längsreihe erstreckt und in Querrichtung verfahrbar ist oder umgekehrt. Damit kann insbesondere vorgesehen sein, dass die Wabenkeramik einen rechteckigen oder quadratischen Querschnitt aufweist. Insbesondere kann vorgesehen sein, dass sich die Düse entlang einer vollständigen Längs- oder Querreihe erstreckt und zum Reinigen sämtlicher in dieser Reihe vorhandenen Kanäle eingerichtet ist.

Ferner kann vorgesehen sein, dass die Reinigungsvorrichtung zum Ausbringen der Reinigungsflüssigkeit mit einem Druck von 1 bar eingerichtet ist. Die Vorrichtung ferner eine Sensorik aufweisen, mittels welcher ermittelbar ist, ob der aktuelle Wasserdruck ausreicht, um den vorhandenen Schmutz zu entfernen. Bei Feststellung, dass der Druck ausreicht, kann der aktuelle Druck beibehalten werden. Bei Feststellung, dass der Druck nicht ausreicht, kann der Druck entsprechend nachjustiert, insbesondere erhöht werden, bis zu einem Punkt, an welchen die Sensorik ein erfolgreiches Entfernen des Schmutzes detektiert.

Ferner kann vorgesehen sein, dass die Reinigungsvorrichtung zum Fördern der Reinigungsflüssigkeit mit einer Pumpe und einem Kompressor verbunden ist. Dabei kann vorgesehen sein, dass die Pumpe die Reinigungsflüssigkeit bis zur Düse pumpt und dass die Düse ferner mehrere über die Düse verteilte Einlässe für die Druckluft aufweist, mittels welchem die Austrittsgeschwindigkeit des Wassers aus der Düse erhöht werden kann. Dazu kann außerdem vorgesehen sein, dass sich die Düse zum Auslass hin verjüngt.

Die Erfindung betrifft ferner ein Verfahren zum Reinigen einer Wabenkeramik zur Aufbereitung von flüssigen Wirtschaftsdüngern aus der Landwirtschaft mittels einer Vorrichtung nach einem der Ansprüche 1 bis 10, aufweisend die Schritte:
Beaufschlagen der Einlassseite der Wabenkeramik mit belastetem Wasser, wie bspw. Gärresten;
Ausleiten des in der Wabenkeramik gefilterten Wassers und der aus dem belasteten Wasser abgeschiedenen Stoffe aus der Auslassseite der Wabenkeramik;
Reinigen der Mehrzahl Kanäle der Wabenkeramik mittels der Reinigungsvorrichtung, wobei zum Reinigen der Kanäle mittels der Reinigungsvorrichtung eine Reinigungsflüssigkeit in Richtung der Kanäle ausgebracht wird.

Die Arbeitsweise der Vorrichtung bzw. der Ablauf des Verfahrens erfolgt dabei folgendermaßen: Die separierten Gärreste kommen von der Biogasanlage und werden nochmals fein gefiltert, um dann einer aeroben Nitrifikationsstufe zugeführt zu werden. Hier werden Ammonium und Nitrit in Nitrat umgewandelt. Dies erfolgt mittels einer ersten Art von Mikroorganismen, welche in der Wabenkeramik untergebracht sind. In einer anaeroben Denitrifikationsstufe reduzieren dann andere Mikroorganismen den Nitratgehalt. Es werden weitere Nährstufe ausgeschieden, die gesammelt werden. Da die Mikroorganismen nach einigen Tagen absterben, nachdem sie sich exponentiell vermehrt haben, beherbergen diese fast alle Nährstoffe, die ab gefiltert werden, nur Phosphor wird getrennt abgeschieden. Die größte Herausforderung besteht darin, den Keramikblock zu Reinigen. Durch die erfindungsgemäße Düse ist dieses gewährleistet, so dass die Anlage ohne Unterbrechung betrieben werden kann.

Es kann vorgesehen sein, dass das Beaufschlagen der Wabenkeramik mit belastetem Wasser während des Reinigens nicht unterbrochen wird. Dies wird insbesondere dadurch ermöglicht, dass die Reinigungsvorrichtung jeweils immer nur eine Teilanzahl der Kanäle gleichzeitig reinigt kontinuierlich oder in bestimmten Zeitabständen über den Wabenkeramik-Block bewegt wird.

Somit kann vorgesehen sein, dass die Reinigungsvorrichtung die Kanäle sukzessive reinigt, wobei die Reinigungsvorrichtung jeweils zumindest zwei Kanäle gleichzeitig reinigt.

Ferner kann vorgesehen sein, dass die Reinigungsvorrichtung mittels eines Antriebs entlang der Einlass- oder der Auslassseite der Wabenkeramik verfahren wird.

Zum Reinigen der Kanäle der Wabenkeramik kann vorgesehen sein, dass die Reinigungsflüssigkeit ein Luft-Wasser-Gemisch ist und mit einem Druck von 1 bar ausgebracht wird.

Beispielhafte Ausführungsformen der Erfindung werden anhand der nachfolgenden Figuren erläutert. Dabei zeigt:
- Fig. 1: eine Seitenansicht einer Ausführungsform der erfindungsgemäßen Vorrichtung;
- Fig. 2: eine perspektivische Ansicht einer Ausführungsform der erfindungsgemäßen Vorrichtung;
- Fig. 3: eine Querschnittsansicht einer Ausführungsform der Wabenkeramik;
- Fig. 4: eine Draufsicht auf eine Ausführungsform der Wabenkeramik;
- Fig. 5: eine Innenansicht einer Ausführungsform der Wabenkeramik;
- Fig. 6: eine perspektivische Ansicht einer Ausführungsform der Düse;
- Fig. 7: eine Detailansicht einer Ausführungsform des Luft bzw. Wassereinlasses der Düse.

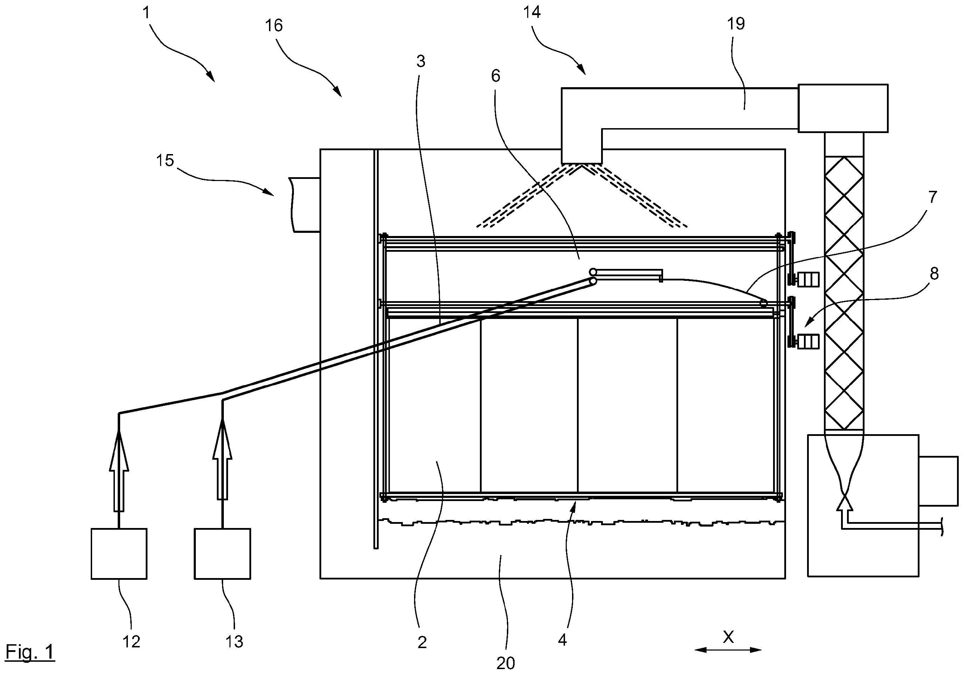

Die in Figur 1 gezeigte Seitenansicht einer Ausführungsform der erfindungsgemäßen Vorrichtung zeigt eine in einem Behälter 16 aufgenommene Wabenkeramik 2, welche an deren Oberseite, die die Einlassseite 3 darstellt, eine Reinigungsvorrichtung 6 aufweist. An der in der gezeigten Darstellung rechten Seite der Vorrichtung 1 weist die Vorrichtung 1 einen Zulauf 14 für belastetes Wasser 19 auf, welche in die Oberseite des Behälters 16 mündet, sodass das belastete Wasser von dort aus auf die Oberseite der Wabenkeramik 2 gelangt. Das belastete Wasser verteilt sich auf der Oberfläche bzw. der Einlassseite 3 der Wabenkeramik 2 und dringt von dort aus durch die Mehrzahl Kanäle 5, welche in der Wabenkeramik 2 ausgebildet sind. Die Kanäle 5 verlaufen dabei in der gezeigten Ausführungsform senkrecht von der Einlassseite 3 hin zur Auslassseite 4 der Wabenkeramik 2. Aus der Auslassseite 4 entweicht schließlich das in der Wabenkeramik 2 gefilterte Wasser 20 und wird von dort aus einem Ablauf 15 zugeführt, welcher in der der gezeigten Darstellung links oben neben dem Behälter 16 aus der Vorrichtung 1 herausführt. Auf der Einlassseite 3 ist eine Reinigungsvorrichtung 6 zu Reinigen der Kanäle 5 angeordnet. Diese weist eine Düse 7 auf, welche über eine Wasserpumpe 12 mit Reinigungsmitteln und über einen Kompressor 13 mit Druckluft versorgt wird, um die Kanäle 5 durchzuspülen. Die Reinigungsvorrichtung 6 bzw. die Düse 7 ist entlang der Einlassseite 3 der Wabenkeramik 2 in X-Richtung linear verfahrbar, sodass jeweils eine Untermenge der Mehrzahl Kanäle 5 von der Reinigungsvorrichtung 6 gleichzeitig gereinigt werden kann und die Vorrichtung 1 während der Reinigung weiter betrieben werden kann. Zum Verfahren der Reinigungsvorrichtung 6 entlang der Einlassseite 3 ist diese mit einem Antrieb 8 gekoppelt, welcher die Reinigungsvorrichtung 6 entlang der X-Richtung linear verfährt.

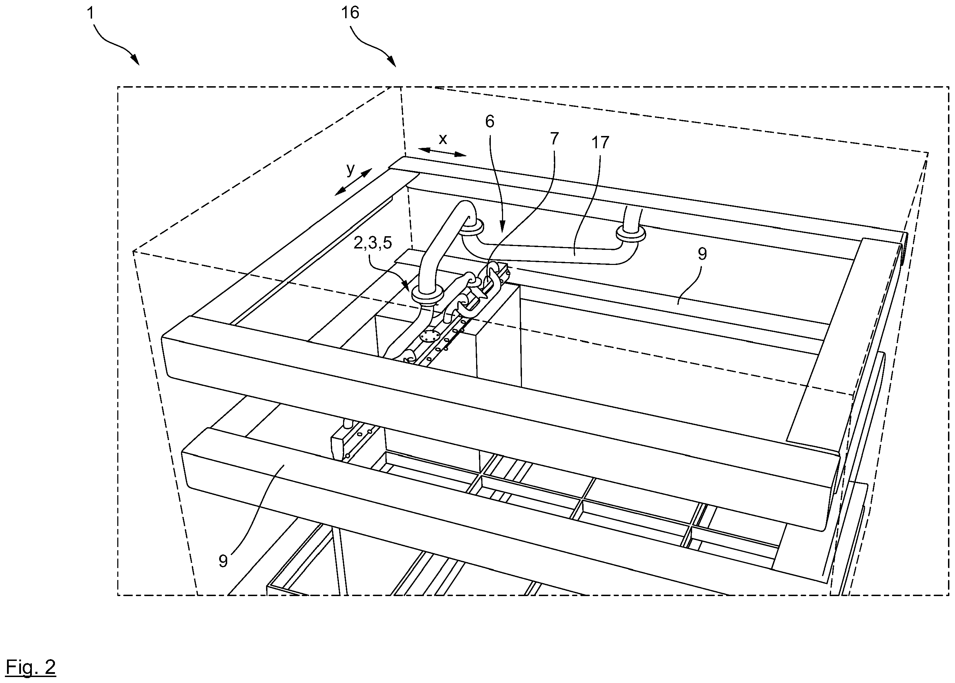

Die in Figur 2 gezeigte perspektivische Innenansicht des Behälters 16 zeigt beispielhaft eine in dem 16 Behälter aufgenommene Wabenkeramik 2, deren Einlassseite 3 zur Oberseite hin weist, wobei zu erkennen ist, dass in der Wabenkeramik 2 noch weitere Wabenkeramiken 2 Platz hätten. Der einzelne Keramikblock der Wabenkeramik 2 ist wie zu erkennen in einem in dem Behälter 16 montierten Rahmengestell fixiert. Das Rahmengestell weist Öffnungen auf, sodass das gefilterte Wasser 20 aus der Unterseite bzw. der Auslassseite 4 der Wabenkeramik 2 austreten kann. Figur 2 zeigt ferner eine beispielhafte Ausführungsform der Reinigungsvorrichtung 6, welche eine sich im Wesentlichen in der Y-Richtung erstreckende Düse 7 aufweist, die an ihren gegenüberliegenden Enden jeweils in einer Schiene oder Gewindespindel 9 seitlich fixiert ist und entlang der Schienen oder Gewindespindeln 9 in X-Richtung linear verfahrbar ist. Die Schienen oder Gewindespindeln 9 sind dabei jeweils an der Behälterinnenwand fixiert. Der Düseneinlass ist mit einer Reinigungsleitung 17 verbunden, welche aus mehreren Rohrelementen gebildet ist, welche gegeneinander verschwenkbar ausgebildet sind, sodass beim Verfahren der Reinigungsvorrichtung 6 entlang der X-Achse die Rohrverbindung entsprechend mitverschwenkt wird.

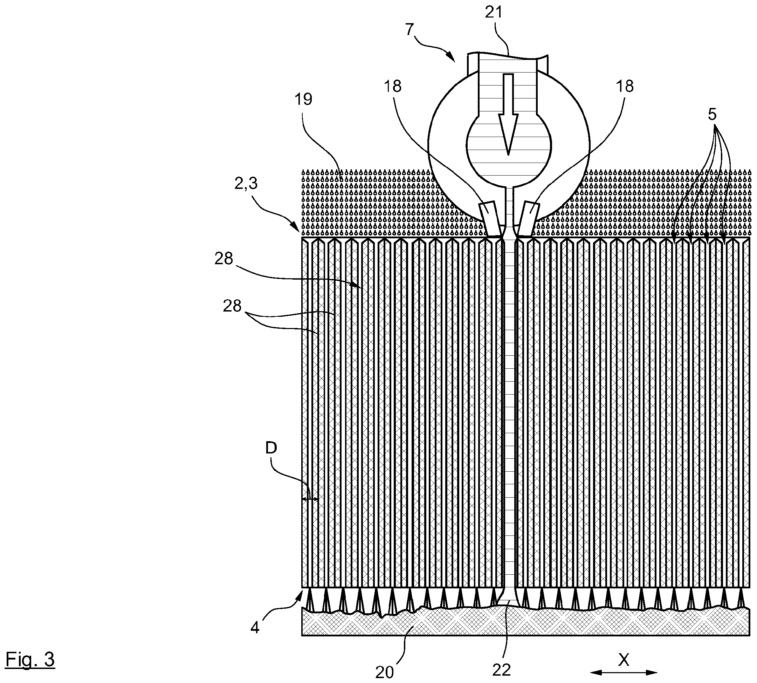

Figur 3 zeigt eine schematische Querschnittsansicht durch die Düse 7 sowie durch die Wabenkeramik 2. Die Düse 7 ist auf der Einlassseite 3 der Wabenkeramik 2 angeordnet und liegt mit Abdichtmitteln 18 an dieser an, um ein seitliches austretendes Reinigungsmittels zwischen der Düse 7 und der Wabenkeramik 2 zu unterbinden. An der Einlassseite 3 trifft über deren Oberfläche verteilt das belastete Wasser 19 auf die Wabenkeramik 2 und läuft anschließend durch die Mehrzahl Kanäle 5 aufgrund der Schwerkraft in Richtung der Auslassseite 4 der Wabenkeramik 2. Die Kanäle weisen jeweils einen Durchmesser D auf, welcher in der dargestellten Ausführungsform 3 mm beträgt. Beim Durchfließen der Kanäle 5 passiert das belastete Wasser 19 die in den Kanälen 5 angesiedelten Mikroorganismen 28, welche für eine Filtration des belasteten Wassers 19 sorgen, sodass auf der Auslassseite 4 schließlich gereinigtes Wasser 20 aus der Wabenkeramik 2 austritt. Mit der Zeit lagert sich mehr und mehr Schmutz 22 in den Kanälen 5 ab, welche dadurch nach und nach verstopfen. Dadurch verringert sich der effektive nutzbare Durchmesser der Kanäle 5. Durch den Einsatz der Reinigungsvorrichtung 6 ist es nun ermöglicht, die Kanäle 5 wieder vom Schmutz zu befreien. Dazu ist die Düse 7 so angeordnet, dass der aus dieser austretende Wasserstrahl parallel zu den Kanälen 5 ausgerichtet ist und daher in Kanalrichtung wirkt. Dadurch lassen sich die Kanäle 5 sukzessive reinigen. Der abgelagerte Schmutz 22 tritt an der Auslassseite 4 in Form von Feststoffpartikeln aus und kann dort entsprechend herausgefiltert werden. Die gezeigte Ausführungsform ist so ausgebildet, dass die Düse 7 zum Reinigen jeweils eine Kanal-Längsreihe 10 ausgebildet ist. Es ist zu erkennen, dass der Kanal 5, auf welchem die Reinigungsvorrichtung 6 zum Zeitpunkt der Abbildung angeordnet ist, bereits von Schmutz 22 befreit wurde und dieser an der Auslassseite 4 aus der Wabenkeramik 2 heraustritt. Nachfolgend kann die Reinigungsvorrichtung 6 weiter in X-Richtung verfahren werden und die Reinigung eines benachbarten Kanals 5 vornehmen.

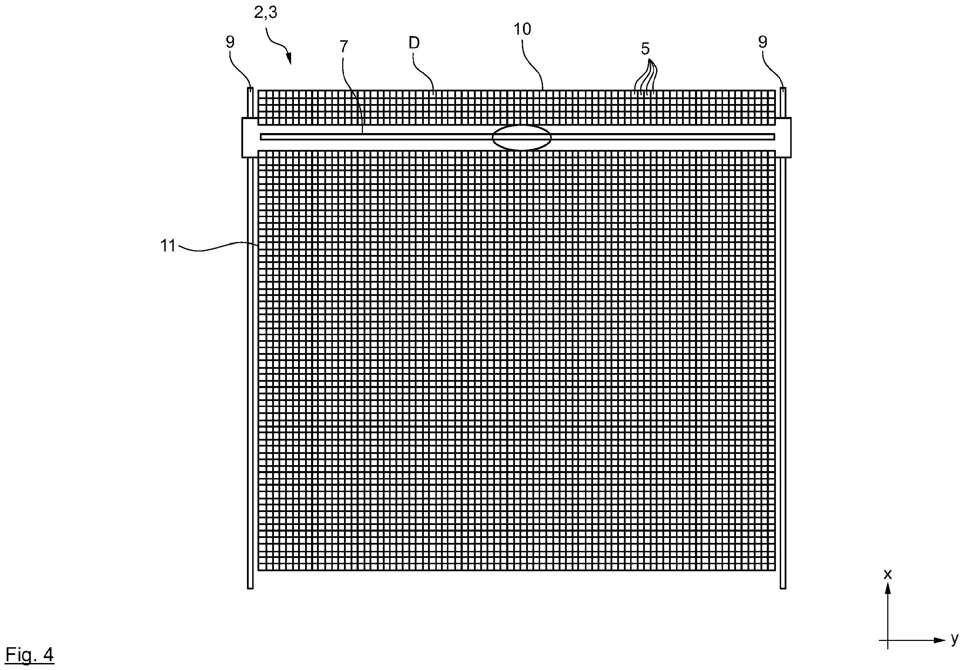

In der in Figur 4 gezeigten Draufsicht auf die Einlassseite 3 der Wabenkeramik 2 ist zu erkennen, dass die Kanäle 5 rasterförmig mit einem quadratischen Querschnitt in der Wabenkeramik 2 ausgebildet sind, wobei die Kanäle 5 jeweils die gleiche Höhe und Breite von jeweils 3 mm aufweisen. Somit weist die Wabenkeramik 2 eine Mehrzahl in X-Richtung verlaufende Längsreihen 10 und eine Mehrzahl in Y-Richtung verlaufende Querreihen 11 auf. Selbstverständlich kann die Anzahl der Längsreihen 10 und der Querreihen 11 je nach Konfiguration der Vorrichtung 1 entsprechend angepasst werden. In der dargestellten Ausführungsform weist neben den Kanälen 5 selbst auch die Wabenkeramik 2 einen quadratischen Querschnitt auf, sodass jeweils dieselbe Anzahl Längsreihen 10 und Querreihen 11 vorgesehen ist. Es ist ferner zu erkennen, dass die Düse 7 die Wabenkeramik 2 in Y-Richtung überspannt und jeweils über an gegenüberliegenden Seiten der Wabenkeramik 2 angeordneten parallelen Schienen oder Gewindespindeln 9 abgestützt und entlang dieser in X-Richtung über die Einlassseite 3 der Wabenkeramik 2 verfahrbar ist.

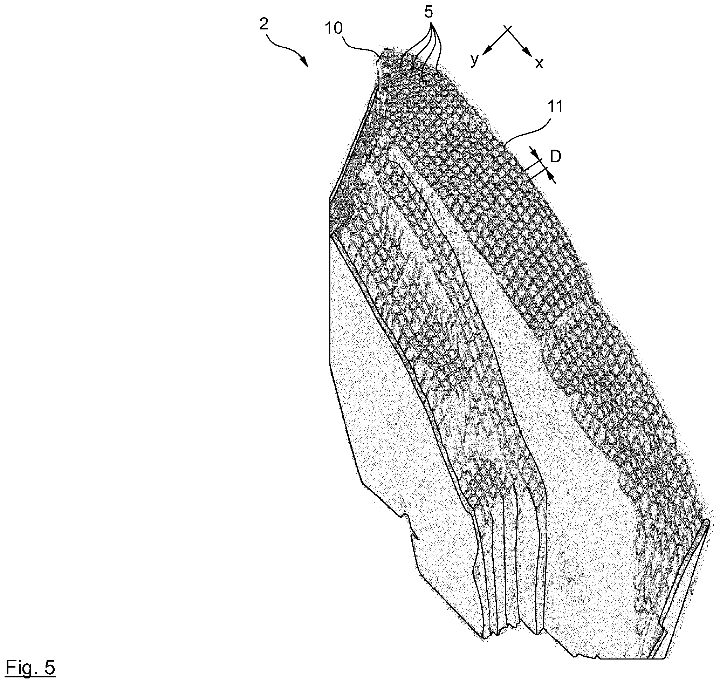

Zur Veranschaulichung des Aufbaus der Wabenkeramik 2 zeigt Figur 5 eine im Wesentlichen diagonal durchschnittene Wabenkeramik 2. Diese weist mehrere in X-Richtung verlaufende Längsreihen 10 und mehrere in Y-Richtung verlaufende Querreihen 11 von Kanälen 5 auf. Die Kanäle 5 weisen einen quadratischen Querschnitt auf, wobei die Kantenlänge der Kanäle als Durchmesser D zu betrachten ist, welcher der dargestellten Ausführungsform 3 mm beträgt.

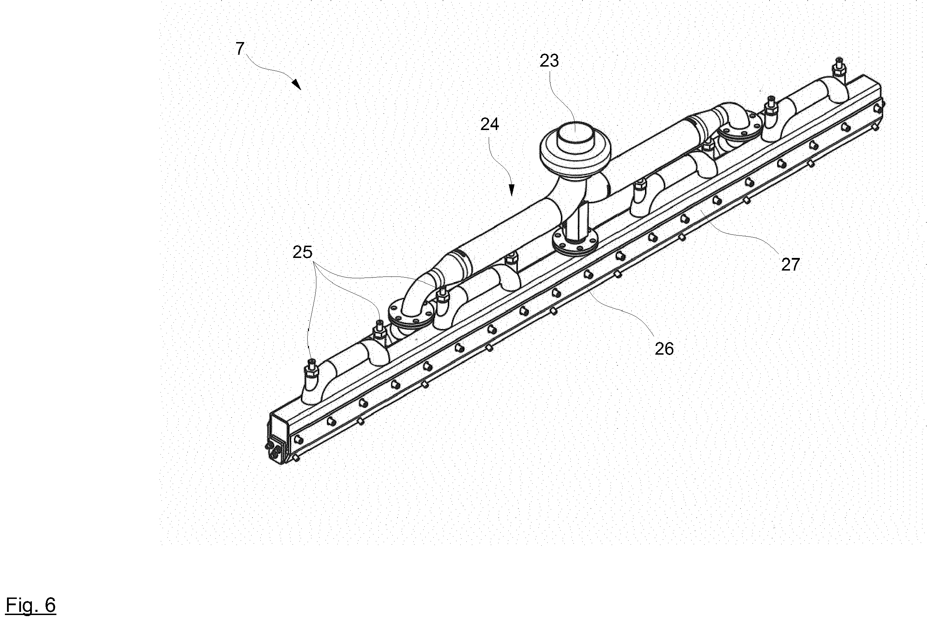

Figur 6 zeigt eine perspektivische Ansicht der Düse 7. Diese weist an ihrer Oberseite einen zentralen Düseneinlass 23 für die Einleitung von Reinigungsmittel bzw. Wasser auf. Von diesem Einlass 23 aus führt eine Verteilungsbrücke 24 das Wasser zu mehreren weiteren Einlässen, welche unmittelbar der Düsenkorpus 27 münden, sodass das Wasser über die Längserstreckung der Düse 7 verteilt in diese eingeleitet werden kann. Jedem unmittelbar der Düsenkorpus 27 mündenden Einlass ist dabei ferner ein Drucklufteinlass 25 zugeordnet, welcher dazu eingerichtet ist, dass ankommende Wasser unter Druck in den Düsenkorpus 27 einzuleiten. An der Unterseite der Düse 7 weist diese ein Düsenauslass 26 auf, welcher sich über die gesamte Längserstreckung der Düse 7 erstreckt. Dieser Düsenauslass 26 besteht im Wesentlichen aus zwei gegeneinander angestellte Bleche, welche den Durchtrittsquerschnitt in Richtung des Auslasses 26 verjüngen, sodass die Fließgeschwindigkeit des Wassers in Richtung des Auslasses für eine maximale Austrittsgeschwindigkeit erhöht wird.

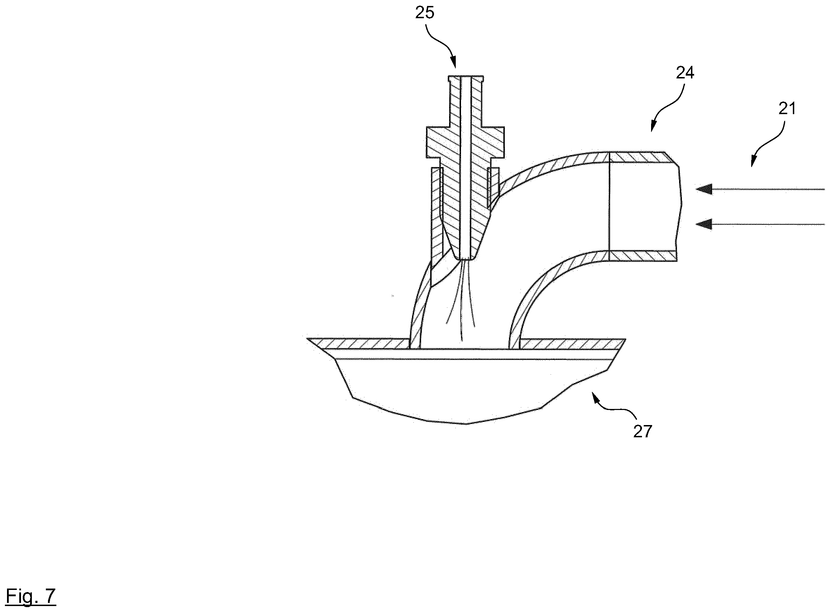

Figur 7 zeigt schließlich eine Detailansicht des Bereichs des in den Düsenkorpus 27 mündenden Einlasses der Verteilungsbrücke 24 im Querschnitt. Die Reinigungsflüssigkeit 21 strömt dabei waagerecht in den gebogenen Einlass hinein und wird darin um 90° umgelenkt, bevor diese in den Düsenkorpus 27 eintritt. Im Bereich der Umlenkung mündet der Drucklufteinlass 25 in den Einlass und ist dabei senkrecht bzw. orthogonal zum Einlassquerschnitt des in den Düsenkorpus 27 mündenden Einlasses ausgerichtet. Der in den Düsenkorpus 27 mündende Einlass ist gleichzeitig orthogonal zur Fließrichtung der Reinigungsflüssigkeit 21 aus dem Düsenauslass 26 ausgerichtet, sodass die Drucklufteinlässe 25 die Druckluft genau parallel und fluchtend ausgerichtet zum Düsenauslass 26 in den Düsenkorpus 27 einblasen.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Vorrichtung
- 2: Wabenkeramik
- 3: Einlassseite
- 4: Auslassseite
- 5: Kanäle
- 6: Reinigungsvorrichtung
- 7: Düse
- 8: Antrieb
- 9: Schiene/Gewindespindel
- 10: Längsreihe
- 11: Querreihe
- 12: Pumpe
- 13: Kompressor
- 14: Zulauf
- 15: Ablauf
- 16: Behälter
- 17: Reinigungsleitung
- 18: Abdichtungsmittel
- 19: belastetes Wasser
- 20: gefiltertes Wasser
- 21: Reinigungsflüssigkeit
- 22: Schmutz
- 23: Düseneinlass
- 24: Verteilungsbrücke
- 25: Drucklufteinlass
- 26: Düsenauslass
- 27: Düsenkorpus
- D: Durchmesser Kanal
- X: Längsrichtung
- Y: Querrichtung

## Patentansprüche

1. Vorrichtung (1) zum Reinigen einer Wabenkeramik (2) für die Aufbereitung von flüssigen Wirtschaftsdüngern;
mit einer Wabenkeramik (2) zum Filtern von belastetem Wasser, wie bspw. Gärreste, wobei die Wabenkeramik (2) eine Einlassseite (3) zum Einleiten von belastetem Wasser und eine Auslassseite (4) zum Ausleiten des in der Wabenkeramik (2) gefilterten Wassers und der aus dem belasteten Wasser abgeschiedenen Stoffe aufweist, wobei die Wabenkeramik (2) Mikroorganismen für die Spaltung des belasteten Wassers aufweist, und wobei die Wabenkeramik (2) eine Mehrzahl zwischen der Einlassseite (3) und der Auslassseite (4) verlaufende Kanäle (5) aufweist;
und mit einer an der Einlass- oder der Auslassseite (3,4) der Wabenkeramik (2) angeordneten Reinigungsvorrichtung (6), welche zum Reinigen der Mehrzahl Kanäle (5) der Wabenkeramik (2) eingerichtet ist.

2. Vorrichtung (1) nach Anspruch 1, wobei die zwischen der Einlassseite (3) und der Auslassseite (4) verlaufenden Kanäle (5) einen Durchmesser (D) von jeweils mindestens 2 mm, bevorzugt mindestens 3 mm aufweisen.

3. Vorrichtung (1) nach Anspruch 1 oder 2, wobei die Reinigungsvorrichtung (6) zumindest eine in Richtung der Wabenkeramik (2) gerichtete Düse (7) zum Ausbringen einer Reinigungsflüssigkeit aufweist, mittels welcher die Mehrzahl Kanäle (5) durchgespült werden können.

4. Vorrichtung (1) nach Anspruch 3, wobei die Düse (7) Abdichtungsmittel (18) zum seitlichen Abdichten der Düse (7) aufweist, wobei die Abdichtungsmittel (18) an der Einlass- oder der Auslassseite (3, 4) der Wabenkeramik (2) anliegen.

5. Vorrichtung (1) nach Anspruch 3 oder 4, wobei die Düse (7) zum gleichzeitigen Reinigen von zumindest zwei der Mehrzahl Kanäle (5) eingerichtet ist.

6. Vorrichtung (1) nach einem der vorangehenden Ansprüche, wobei die Reinigungsvorrichtung (6) einen Antrieb (8) aufweist, mittels welcher die Düse (7) entlang der Einlass- oder der Auslassseite (3, 4) der Wabenkeramik (2) verfahrbar ist.

7. Vorrichtung (1) nach einem der Ansprüche 3 bis 6, wobei die Düse (7) in zumindest einer Schiene oder Gewindespindel (9) seitlich fixiert und entlang dieser verfahrbar ist.

8. Vorrichtung (1) nach einem der Ansprüche 3 bis 7, wobei sich die Wabenkeramik (2) in einer Längs- und in einer Querrichtung (X, Y) erstreckt, entlang welcher die Mehrzahl Kanäle (5) in Längs- und Querreihen (10, 11) rasterförmig angeordnet sind, wobei sich die Düse (7) entlang zumindest einer Längsreihe (10) erstreckt und in Querrichtung (Y) verfahrbar ist oder umgekehrt.

9. Vorrichtung (1) nach einem der vorangehenden Ansprüche, wobei die Reinigungsvorrichtung (6) zum Ausbringen der Reinigungsflüssigkeit mit einem Druck von 1 bar eingerichtet ist.

10. Vorrichtung (1) nach einem der vorangehenden Ansprüche, wobei die Reinigungsvorrichtung (6) zum Fördern der Reinigungsflüssigkeit mit einer Pumpe (12) und einem Kompressor (13) verbunden ist.

11. Verfahren zum Reinigen einer Wabenkeramik (2) zur Aufbereitung von flüssigen Wirtschaftsdüngern aus der Landwirtschaft mittels einer Vorrichtung (1) nach einem der Ansprüche 1 bis 10, aufweisend die Schritte:
Beaufschlagen der Einlassseite (3) der Wabenkeramik (2) mit belastetem Wasser, wie bspw. Gärresten;
Ausleiten des in der Wabenkeramik (2) gefilterten Wassers und der aus dem belasteten Wasser abgeschiedenen Stoffe aus der Auslassseite (4) der Wabenkeramik (2);
Reinigen der Mehrzahl Kanäle (5) der Wabenkeramik (2) mittels der Reinigungsvorrichtung (6), wobei zum Reinigen der Kanäle (5) mittels der Reinigungsvorrichtung (6) eine Reinigungsflüssigkeit in Richtung der Kanäle (5) ausgebracht wird.

12. Verfahren nach Anspruch 11, wobei das Beaufschlagen der Wabenkeramik (2) mit belastetem Wasser während des Reinigens nicht unterbrochen wird.

13. Verfahren nach Anspruch 11 oder 12, wobei die Reinigungsvorrichtung (6) die Mehrzahl Kanäle (5) sukzessive reinigt, wobei die Reinigungsvorrichtung (6) jeweils zumindest zwei Kanäle (5) gleichzeitig reinigt.

14. Verfahren nach einem der Ansprüche 11 bis 13, wobei die Reinigungsvorrichtung (6) mittels eines Antriebs (8) entlang der Einlass- oder der Auslassseite (3, 4) der Wabenkeramik (2) verfahren wird.

15. Verfahren nach einem der Ansprüche 11 bis 14, wobei die Reinigungsflüssigkeit ein Luft-Wasser-Gemisch ist und mit einem Druck von 1 bar ausgebracht wird.

## Geänderte Patentansprüche

### Geänderte Patentansprüche gemäss Regel 137(2) EPÜ.

1. Vorrichtung (1) zum Reinigen einer Wabenkeramik (2) für die Aufbereitung von flüssigen Wirtschaftsdiingern;
mit einer Wabenkeramik (2) zum Filtern von belastetem Wasser, wie bspw. Gärreste, wobei die Wabenkeramik (2) eine Einlassseite (3) zum Einleiten von belastetem Wasser und eine Auslassseite (4) zum Ausleiten des in der Wabenkeramik (2) gefilterten Wassers und der aus dem belasteten Wasser abgeschiedenen Stoffe aufweist, wobei die Wabenkeramik (2) Mikroorganismen für die Spaltung des belasteten Wassers aufweist, und wobei die Wabenkeramik (2) eine Mehrzahl zwischen der Einlassseite (3) und der Auslassseite (4) verlaufende Kanäle (5) aufweist;
und mit einer an der Einlass- oder der Auslassseite (3, 4) der Wabenkeramik (2) angeordneten Reinigungsvorrichtung (6), welche zum Reinigen der Mehrzahl Kanäle (5) der Wabenkeramik (2) eingerichtet ist,
wobei die Reinigungsvorrichtung (6) zumindest eine in Richtung der Wabenkeramik (2) gerichtete Düse (7) zum Ausbringen einer Reinigungsflüssigkeit aufweist, mittels welcher die Mehrzahl Kanäle (5) durchgespült werden können.

2. Vorrichtung (1) nach Anspruch 1, wobei die zwischen der Einlassseite (3) und der Auslassseite (4) verlaufenden Kanäle (5) einen Durchmesser (D) von jeweils mindestens 2 mm, bevorzugt mindestens 3 mm aufweisen.

3. Vorrichtung (1) nach Anspruch 1, wobei die Düse (7) Abdichtungsmittel (18) zum seitlichen Abdichten der Düse (7) aufweist, wobei die Abdichtungsmittel (18) an der Einlass- oder der Auslassseite (3, 4) der Wabenkeramik (2) anliegen.

4. Vorrichtung (1) nach einem der Ansprüche 1 bis 3, wobei die Düse (7) zum gleichzeitigen Reinigen von zumindest zwei der Mehrzahl Kanäle (5) eingerichtet ist.

5. Vorrichtung (1) nach einem der vorangehenden Ansprüche, wobei die Reinigungsvorrichtung (6) einen Antrieb (8) aufweist, mittels welcher die Düse (7) entlang der Einlass- oder der Auslassseite (3, 4) der Wabenkeramik (2) verfahrbar ist.

6. Vorrichtung (1) nach einem der vorangehenden Ansprüche, wobei die Düse (7) in zumindest einer Schiene oder Gewindespindel (9) seitlich fixiert und entlang dieser verfahrbar ist.

7. Vorrichtung (1) nach einem der vorangehenden Ansprüche, wobei sich die Wabenkeramik (2) in einer Längs- und in einer Querrichtung (X, Y) erstreckt, entlang welcher die Mehrzahl Kanäle (5) in Längs- und Querreihen (10, 11) rasterförmig angeordnet sind, wobei sich die Düse (7) entlang zumindest einer Längsreihe (10) erstreckt und in Querrichtung (Y) verfahrbar ist oder umgekehrt.

8. Vorrichtung (1) nach einem der vorangehenden Ansprüche, wobei die Reinigungsvorrichtung (6) zum Ausbringen der Reinigungsflüssigkeit mit einem Druck von 1 bar eingerichtet ist.

9. Vorrichtung (1) nach einem der vorangehenden Ansprüche, wobei die Reinigungsvorrichtung (6) zum Fördern der Reinigungsflüssigkeit mit einer Pumpe (12) und einem Kompressor (13) verbunden ist.

10. Verfahren zum Reinigen einer Wabenkeramik (2) zur Aufbereitung von flüssigen Wirtschaftsdüngern aus der Landwirtschaft mittels einer Vorrichtung (1) nach einem der Ansprüche 1 bis 10, aufweisend die Schritte:
Beaufschlagen der Einlassseite (3) der Wabenkeramik (2) mit belastetem Wasser, wie bspw. Gärresten;
Ausleiten des in der Wabenkeramik (2) gefilterten Wassers und der aus dem belasteten Wasser abgeschiedenen Stoffe aus der Auslassseite (4) der Wabenkeramik (2);
Reinigen der Mehrzahl Kanäle (5) der Wabenkeramik (2) mittels der Reinigungsvorrichtung (6), wobei zum Reinigen der Kanäle (5) mittels der Reinigungsvorrichtung (6) eine Reinigungsflüssigkeit in Richtung der Kanäle (5) ausgebracht wird.

11. Verfahren nach Anspruch 10, wobei das Beaufschlagen der Wabenkeramik (2) mit belastetem Wasser während des Reinigens nicht unterbrochen wird.

12. Verfahren nach Anspruch 10 oder 11, wobei die Reinigungsvorrichtung (6) die Mehrzahl Kanäle (5) sukzessive reinigt, wobei die Reinigungsvorrichtung (6) jeweils zumindest zwei Kanäle (5) gleichzeitig reinigt.

13. Verfahren nach einem der Ansprüche 10 bis 12, wobei die Reinigungsvorrichtung (6) mittels eines Antriebs (8) entlang der Einlass- oder der Auslassseite (3, 4) der Wabenkeramik (2) verfahren wird.

14. Verfahren nach einem der Ansprüche 10 bis 3, wobei die Reinigungsflüssigkeit ein Luft-Wasser-Gemisch ist und mit einem Druck von 1 bar ausgebracht wird.
